Europäisches Patentamt

European Patent Office

Office européen des brevets

(19)

(11) **EP 0 955 093 B1**

(12) **FASCICULE DE BREVET EUROPEEN**

(45) Date de publication et mention
de la délivrance du brevet:
**03.09.2003 Bulletin 2003/36**

(51) Int Cl.⁷: $B01J\ 29/48$, $B01J\ 29/42$, $C10G\ 47/20$

(21) Numéro de dépôt: **99400975.1**

(22) Date de dépôt: **21.04.1999**

(54) **Catalyseur à base de zéolithe bêta et d'element promoteur et procédé d'hydrocraquage**

Katalysator auf Basis von Beta-Zeolith mit Promotorelement und Verfahren zum Hydrocracken

Catalyst based on beta zeolite with promoting element and process for hydrocracking

(84) Etats contractants désignés:
**DE ES FR IT NL**

(30) Priorité: **06.05.1998 FR 9805736**
**06.05.1998 FR 9805737**

(43) Date de publication de la demande:
**10.11.1999 Bulletin 1999/45**

(73) Titulaire: **Institut Francais du Petrole**
**92852 Rueil-Malmaison Cedex (FR)**

(72) Inventeurs:
• **Kasztelan, Slavik**
**92500 Rueil Malmaison (FR)**
• **George-Marchal, Nathalie**
**69230 Saint Genis Laval (FR)**
• **Benazzi, Eric**
**78400 Chatou (FR)**

(56) Documents cités:
EP-A- 0 094 827          EP-A- 0 095 304
EP-A- 0 363 531          FR-A- 2 758 278
GB-A- 1 390 359          US-A- 3 594 310
US-A- 4 419 220          US-A- 4 906 599
US-A- 5 015 361          US-A- 5 393 409
US-A- 5 409 595          US-A- 5 520 799
US-A- 5 525 209

Remarques:
Le dossier contient des informations techniques présentées postérieurement au dépôt de la demande et ne figurant pas dans le présent fascicule.

**Description**

La présente invention concerne un catalyseur utilisable pour la conversion de charges hydrocarbonées, et en particulier l'hydrocraquage de charges hydrocarbonées, ledit catalyseur contenant au moins un métal hydro-déshydrogénant, par exemple, choisi parmi les métaux des groupe VIB et VIII (groupe 6 et groupes 8, 9 et 10 selon la nouvelle notation de la classification périodique des éléments : Handbook of Chemistry and Physics, 76ième édition, 1995-1996, intérieur 1ère page de couverture), au moins une matrice poreuse amorphe ou mal cristallisée (et généralement de type oxyde) et au moins une zéolithe bêta de préférence désaluminée. Le catalyseur renferme également au moins un élément promoteur déposé sur le catalyseur et choisi dans le groupe formé par le bore, le silicium et le phosphore. En outre le catalyseur contient éventuellement au moins un élément du groupe VIIA (groupe 17 des halogènes) et notamment le fluor, et éventuellement au moins un élément du groupe VIIB, tel que le manganèse, le technétium et le rhénium.

La présente invention concerne également les procédés de préparation dudit catalyseur, ainsi que son utilisation pour la conversion de charges hydrocarbonées telles que les coupes pétrolières et les coupes issues du charbon. En particulier, l'invention concerne l'hydrocraquage de charges hydrocarbonées contenant par exemple des composés aromatiques, et/ou oléfiniques, et/ou naphténiques, et/ou paraffiniques et contenant éventuellement des métaux, et/ou de l'azote, et/ou de l'oxygène et/ou du soufre.

L'hydrocraquage prend une importance de plus en plus grande dans la pratique du raffinage avec la nécessité croissante convertir des fractions lourdes en fractions plus légères valorisables en tant que carburants. Ceci résulte de la demande croissante en carburants. Cette valorisation implique une réduction relativement importante du poids moléculaire des constituants lourds, qui peut être obtenue par exemple au moyen de réactions de craquage.

Le procédé d'hydrocraquage catalytique met en oeuvre des catalyseurs contenant d'une part une fonction hydrogénante, désulfurante et déazotante apportée par la phase active à base de métaux de transition et d'autre part une fonction acide, en général apportée par la matrice amorphe ou une zéolithe ou encore leur mélange. Un bon catalyseur d'hydrocraquage sera constitué d'une fonction hydrogénante et d'une fonction acide bien ajustées. L'hydrocraquage est employé pour traiter des charges telles que les gazoles sous vide, les résidus atmosphériques ou sous vide, désasphaltés ou non. L'hydrocraquage permet d'obtenir des coupes plus légères fortement purifiées c'est à dire à faible teneur en soufre, azote et métaux.

Il est donc important d'augmenter l'activité et la sélectivité des catalyseurs d'hydrocraquage. L'un des moyens consiste à acidifier la matrice sans empoisonner l'activité de la phase hydrogénante à base de métaux de transition ni l'activité craquante de la phase acide à base de zéolithe.

US-A-5 393 409 divulgue un catalyseur comprenant une matrice, une zéolithe Y désaluminée, un métal hydrogénant du groupe VIB ou VIII et de manière non préférée la présence optionnelle de bore ou de phosphore. De plus, ce document considère la possibilité de remplacer la zéolithe Y par zéolithe Bêta.

Le catalyseur selon l'invention renferme au moins une zéolithe bêta au moins partiellement sous forme hydrogène. On entend par zéolithe bêta les zéolithes de type structural BEA telles que décrites dans l'ouvrage "Atlas of Zeolite Strcuture Types", W.M. Meier, D.H. Olson and Ch. Baerlocher, 4th Revised edition, 1996, Elsevier.

Parmi les zéolithes bêta on préfère habituellement employer des zéolithes bêta dont le rapport atomique global, silicium/aluminium (Si/AI) est supérieur à environ 10 et de manière plus préférée des zéolithes bêta dont le rapport Si/AI est compris entre 10 et 200 et de manière encore plus préféré entre 10 et 150. Ces zéolithes bêta possédant les rapports Si/AI décrits ci-dessus peuvent être obtenus à la synthèse ou de façon très préférée par toute technique de désalumination post-synthèse connue de l'homme de l'art.

Sont préférées des zéolites bêta désaluminées qui présentent des rapports atomiques Si/AI = 10-100, avan-tageusement 20-70 et de préférence 25-55.

La première méthode dite de l'attaque acide directe comprend une première étape de calcination sous flux d'air sec, à une température généralement comprise entre environ 450 et 550°C, qui a pour but d'éliminer le structurant organique présent dans la microporosité de la zéolithe, suivie d'une étape de traitement par une solution aqueuse d'un acide minéral tel que $HNO_3$ ou HCI ou organique tel que $CH_3CO_2H$. Cette dernière étape peut être répétée autant de fois qu'il est nécessaire afin d'obtenir le niveau de désalumination voulue. Entre ces deux étapes il est possible de réaliser un ou plusieurs échanges ioniques par au moins une solution $NH_4NO_3$, de manière à éliminer au moins en partie, de préférence pratiquement totalement, le cation alcalin, en particulier le sodium. De même, à la fin du traitement de désalumination par attaque acide directe, il est possible de réaliser un ou plusieurs échanges ioniques par au moins une solution $NH_4NO_3$, de manière à éliminer les cations alcalins résiduels et en particulier le sodium.

Pour atteindre le rapport Si/AI désiré, il est nécessaire de bien choisir les conditions opératoires; de ce point de vue les paramètres les plus critiques sont la température du traitement par la solution aqueuse d'acide, la concentration de ce dernier, sa nature, le rapport entre la quantité de solution acide et la masse de zéolithe traitée, la durée du traitement et le nombre de traitement réalisés.

On peut également effectuer des traitements de désalumination par des composés chimiques désaluminants tels que (à titre d'exemples et de façon non exhaustive) le tétrachlorure de silicium ($SiCl_4$), l'hexafluorosilicate d'ammonium [$(NH4)_2SiF_6$], l'acide éthylènediaminetétracétique (EDTA) ainsi que sa forme mono et disodique. Ces réactifs peuvent être utilisés en solution ou en phase gaz par exemple dans le cas de $SiCl_4$.

La deuxième méthode dite de traitement thermique (en particulier à la vapeur d'eau ou "steaming") + attaque acide, comprend, dans un premier temps, la calcination sous flux d'air sec, à une température généralement comprise entre environ 450 et 550°C, qui a pour but d'éliminer le structurant organique occlus dans la microporosité de la zéolithe. Puis le solide ainsi obtenu est soumis à un ou plusieurs échanges ioniques par au moins une solution $NH_4NO_3$, de manière à éliminer au moins en partie, de préférence pratiquement totalement, le cation alcalin, en particulier le sodium, présent en position cationique dans la zéolithe. La zéolithe ainsi obtenue est soumise à au moins un cycle de désalumination de charpente, comportant au moins un traitement thermique réalisé, éventuellement et de préférence en présence de vapeur d'eau, à une température généralement comprise entre 500 et 900°C, et éventuellement suivie d'au moins une attaque acide par une solution aqueuse d'un acide minéral ou organique tel que défini précédemment . Les conditions de calcination en présence de vapeur d'eau (température, pression de vapeur d'eau et durée du traitement) ainsi que les conditions d'attaque acide post-calcination (durée de l'attaque, concentration de l'acide, nature de l'acide utilisé et le rapport entre le volume d'acide et la masse de zéolithe), sont adaptées de manière à obtenir le niveau de désalumination souhaité. Dans le même but on peut aussi jouer sur le nombre de cycles traitement thermique-attaque acide qui sont effectués.

Une variante de cette deuxième méthode peut constituer à remplacer l'étape dite de l'attaque acide, c'est à dire du traitement par une solution d'acide, par un traitement par une solution d'un composé chimique désaluminant tels que, par exemple, ceux cités précédemment à savoir le tétrachlorure de silicium ($SiCl_4$), l'hexafluorosilicate d'ammonium [$(NH4)_2SiF_6$], l'acide éthylènediaminetétracétique (EDTA) ainsi que sa forme mono et disodique.

Le cycle de désalumination de la charpente, comportant au moins une étape de traitement thermique, réalisé éventuellement et de préférence en présence de vapeur d'eau, et au moins une étape d'attaque en milieu acide de la zéolithe, peut être répété autant de fois qu'il est nécessaire pour obtenir la zéolithe désaluminée possédant les caractéristiques désirées. De même, suite au traitement thermique, réalisé éventuellement et de préférence en présence de vapeur d'eau, plusieurs attaques acides successives, avec des solutions en acide de concentrations différentes, peuvent être opérées.

Une variante de cette deuxième méthode de calcination peut consister à réaliser le traitement thermique de la zéolithe contenant le structurant organique, à une température généralement comprise entre 500 et 850°C, éventuellement et de préférence en présence de vapeur d'eau. Dans ce cas les étapes de calcination du structurant organique et de désalumination de la charpente sont réalisées simultanément. Puis, la zéolithe est éventuellement traitée par au moins une solution aqueuse d'un acide minéral (par exemple de HNO3 ou de HCl) ou organique($CH_3CO_2H$ par exemple). Enfin, le solide ainsi obtenu peut être éventuellement soumis à au moins un échange ionique par au moins une solution $NH_4NO_3$, de manière à éliminer pratiquement tout cation alcalin, en particulier le sodium, présent en position cationique dans la zéolithe.

On emploie avantageusement des zéolithes bêta , soit entièrement sous forme hydrogène, soit éventuellement, elle a été partiellement échangée avec des cations métalliques, par exemple des cations des métaux alcalins ou alcalino-terreux et/ou des cations de métaux de terres rares de numéro atomique 57 à 71 inclus (Zeolite Molecular Sieves Structure, Chemistry and Uses, D.W. BRECK, J. WILLEY and sons 1973). Le rapport atomique cation/Al est inférieur à 0,8, de préférence inférieur à 0,5 et de manière encore plus préférée inférieur à 0,1.

Les zéolithes Bêta préférées selon l'invention présentent des surfaces BET supérieures à 400 m$^2$/g et de préférence comprises entre environ 450 et 850 m$^2$/g.

Le catalyseur selon l'invention présente une activité et une sélectivité en hydrocraquage plus importante que les formules catalytiques à base de zéolithe bêta connues dans l'art antérieur. Sans vouloir être lié par une quelconque théorie, il semble que cette activité particulièrement élevée des catalyseurs de la présente invention est due aux renforcement de l'acidité du catalyseur par la présence de l'élément promoteur (P, B, Si). En particulier, la présence conjointe du bore et du silicium sur la matrice induit une amélioration tout à fait intéressante des propriétés en hydrocraquage par rapport aux catalyseurs utilisés habituellement. Le renforcement est également accentué par la présence d'élément du groupe VIIB.

Le catalyseur de la présente invention renferme généralement en % poids par rapport à la masse totale du catalyseur :

- 0,1 à 60%, de préférence de 0,1 à 50% et de manière encore plus préférée de 0,1 à 40% d'au moins un métal hydro-dèshydrogénant choisi parmi le groupe VIB et le groupe VIII (les % étant exprimés en % oxyde),
- 0,1 à 99%, de préférence de 1 à 98% d'au moins une matrice minérale poreuse amorphe ou mal cristallisée (généralement de type oxyde),
- 0,1 à 99,7%, avantageusement de 0,1 à 90 %, de préférence de 0,1 à 80% et de manière encore plus préférée de 0,1 à 60% de zéolithe bêta comme définie précédemment, et de préférence désaluminée.

le dit catalyseur renferme en outre :

- 0,1 à 20%, de préférence de 0,1 à 15% et de manière encore plus préférée de 0,1 à 10% d'un élément promoteur choisi dans le groupe formé par le bore, le silicium et le phosphore (les % étant exprimés en % oxyde),

et éventuellement,

- 0 à 20%, de préférence de 0,1 à 15% et de manière encore plus préférée de 0,1 à 10% d'au moins un élément choisi dans le groupe VIIA(halogènes), de préférence le fluor
- 0 à 20%, de préférence de 0,1 à 20 % ou de 0,1 à 15% et de manière encore plus préférée de 0,1 à 10% d'au moins un élément choisi dans le groupe VIIB (les % étant exprimés en % oxyde).

Les métaux du groupe VIB, du groupe VIII et du groupe VIIB du catalyseur de la présente invention peuvent être présent en totalité ou partiellement sous la forme métallique et/ou oxyde et/ou sulfure.

La fonction hydrogénante est assurée par au moins un élément des groupes VIB ou VIII. Parmi les éléments du groupe VIB, le molybdène et le tungstène sont préférés.

Les sources d'élément du groupe VIB qui peuvent être utilisées sont bien connues de l'homme du métier. Par exemple, parmi les sources de molybdène et de tungstène, on peut utiliser les oxydes et hydroxydes, les acides molybdiques et tungstiques et leurs sels en particulier les sels d'ammonium tels que le molybdate d'ammonium, l'heptamolybdate d'ammonium, le tungstate d'ammonium, l'acide phosphomolybdique, l'acide phosphotungstique et leurs sels. On utilise de préférence les oxydes et les sels d'ammonium tels que le molybdate d'ammonium, l'heptamolybdate d'ammonium et le tungstate d'ammonium

Le catalyseur de la présente invention peut renfermer un métal du groupe VIII tel que fer, ruthénium, rhodium, palladium, osmium, iridium, platine et de préférence cobalt, nickel. D'une manière avantageuse on utilise les associations de métaux suivantes : nickel-molybdène, cobalt-molybdène, fer-molybdène, fer-tungstène, nickel-tungstène, cobalt-tungstène, les associations préférées sont : nickel-molybdène, nickel-tungstène. Il est également possible d'utiliser des associations de trois métaux par exemple nickel-cobalt-molybdène.

Les sources d'élément du groupe VIII qui peuvent être utilisées sont bien connues de l'homme du métier. Par exemple, on utilisera les nitrates, les sulfates, les phosphates, les halogénures par exemple, chlorures, bromures et fluorures, les carboxylates par exemple acétates et carbonates.

Le catalyseur de l'invention peut renfermer au mois un élément du groupe VIIB tel que le manganèse, le technétium, le rhénium ; le manganèse et le rhénium étant préférés.

Les sources d'élément du groupe VIIB qui peuvent être utilisées sont bien connues de l'homme du métier. On utilise de préférence les sels d'ammonium, les nitrates et les chlorures.

Le catalyseur de la présente invention renferme donc également au moins une matrice minérale poreuse amorphe ou mal cristallisée généralement de type oxyde. On peut citer à titre d'exemple non limitatif les alumines, les silices, les silice-alumines. On peut choisir également les aluminates. On préfère utiliser des matrices contenant de l'alumine, sous toutes ces formes connues de l'Homme du métier, et de manière encore plus préférée les alumines, par exemple l'alumine gamma.

On peut aussi avantageusement utiliser des mélanges d'alumine et de silice, des mélanges d'alumine et de silice-alumine.

L'élément promoteur (P, B, Si) est déposé sur le catalyseur. Il a été introduit sur le support contenant au moins la zéolithe et la matrice, et contenant également de préférence le ou les métaux hydrogénants.

L'élément promoteur, et en particulier le silicium introduit sur le support selon l'invention, est principalement localisé sur la matrice du support et peut être caractérisé par des techniques telles que la microsonde de Castaing (profit de répartition des divers éléments), la microscopie électronique par transmission couplée à une analyse X des composants du catalyseurs, ou bien encore par l'établissement une cartographie de répartition des éléments présents dans le catalyseur par microsonde électronique. Ces analyses locales vont fournir la localisation des divers éléments, en particulier la localisation de l'élément promoteur, notamment de la silice amorphe sur la matrice du support due à l'introduction du silicium promoteur selon l'invention. La localisation du silicium de la charpente de la zéolithe contenue dans le support est aussi révélée. Par ailleurs, une estimation quantitative des teneurs locales en silicium ou autres éléments promoteur peut-être effectuée.

D'autre part, la RMN du solide du $^{29}$Si à rotation à l'angle magique est une technique qui permet de détecter la présence de silice amorphe introduite dans le catalyseur selon le mode opératoire décrit dans la présente invention.

La source de bore peut être l'acide borique, de préférence l'acide orthoborique $H_3BO_3$, le biborate ou le pentaborate d'ammonium, l'oxyde de bore, les esters boriques. Le bore peut par exemple être introduit sous la forme d'un mélange d'acide borique, d'eau oxygénée et un composé organique basique contenant de l'azote tels que l'ammoniaque, les amines primaires et secondaires, les amines cycliques, les composés de la famille de la pyridine et des quinoléines et les composés de la famille du pyrrole. Le bore peut être introduit par exemple par une solution d'acide borique dans un mélange eau/alcool.

La source de phosphore préférée est l'acide orthophosphorique $H_3PO_4$, mais ses sels et esters comme les phosphates d'ammonium conviennent également.-Le phosphore peut par exemple être introduit sous la forme d'un mélange d'acide phosphorique et un composé organique basique contenant de l'azote tels que l'ammoniaque, les amines primaires et secondaires, les amines cycliques, les composés de la famille de la pyridine et des quinoléines et les composés de la famille du pyrrole.

L'imprégnation du molybdène peut être facilitée par ajout d'acide phosphorique dans les solutions de paramolybdate d'ammonium, ce qui permet d'introduire aussi le phosphore de façon à promouvoir l'activité catalytique. D'autres composés du phosphore peuvent être utilisés comme il est bien connu de l'homme du métier.

De nombreuses sources de silicium peuvent être employées. Ainsi, on peut utiliser l'orthosilicate d'éthyle Si$(OEt)_4$, les siloxanes, les polysiloxanes, les silicones, les émulsions de silicones, les silicates d'halogénures comme le fluorosilicate d'ammonium $(NH_4)_2 SiF_6$ ou le fluorosilicate de sodium $Na_2SiF_6$. L'acide silicomolybdique et ses sels, l'acide silicotungstique et ses sels peuvent également être avantageusement employés. Le silicium peut être ajouté par exemple par imprégnation de silicate d'éthyle en solution dans un mélange eau/alcool. Le silicium peut être ajouté par exemple par imprégnation d'une émulsion de silicone dans l'eau.

Le catalyseur de l'invention peut également renfermer au moins un halogène, le fluor étant préféré.

Les sources d'élément du groupe VIIA qui peuvent être utilisées sont bien connues de l'homme du métier. Par exemple, les anions fluorures peuvent être introduits sous forme d'acide fluorhydrique ou de ses sels. Ces sels sont formés avec des métaux alcalins, l'ammonium ou un composé organique. Dans ce dernier cas, le sel est avantageusement formé dans le mélange réactionnel par réaction entre le composé organique et l'acide fluorhydrique. Il est également possible d'utiliser des composés hydrolysables pouvant libérer des anions fluorures dans l'eau, comme le fluorosilicate d'ammonium $(NH_4)_2SiF_6$, le tétrafluorure de silicium $SiF_4$ ou de sodium $Na_2SiF_6$. Le fluor peut être introduit par exemple par imprégnation d'une solution aqueuse d'acide fluorhydrique ou de fluorure d'ammonium.

L'élément promoteur et éventuellement l'élément choisi dans le groupe VIIA des halogénures, peuvent être introduits par imprégnation dans le catalyseur à divers niveaux de la préparation et de diverses manières.

D'une façon générale on prépare un mélange contenant au moins une matrice, de la zéolithe bêta, et éventuellement au moins un métal hydrogénant choisi parmi les métaux du groupe VIII et du groupe VIB. Le mélange est ou n'est pas mis en forme. Il peut contenir éventuellement au moins un élément du groupe VIIB.

L'imprégnation du mélange (avec au moins une solution contenant au moins un élément promoteur et éventuellement l'halogène ) est de préférence effectuée par la méthode d'imprégnation dite "à sec" bien connue de l'homme du métier. L'imprégnation peut être effectuée en une seule étape par une solution contenant l'ensemble des éléments constitutifs du catalyseur final, ou par une ou plusieurs opérations d'imprégnation par exemple avec excès de solution sur le précurseur calciné.

Dans le cas où le catalyseur contient du bore, une méthode préférée selon l'invention consiste à préparer une solution aqueuse d'au moins un sel de bore tel que le biborate d'ammonium ou le pentaborate d'ammonium en milieu alcalin et en présence d'eau oxygénée et à procéder à une imprégnation dite à sec, dans laquelle on remplit le volume des pores du précurseur par la solution contenant le bore.

Dans le cas où le catalyseur contient du silicium on utilisera de préférence une solution d'un composé du silicium de type silicone.

Dans le cas où le catalyseur contient du bore et du silicium, le dépôt de bore et de silicium peut aussi se faire de manière simultanée en utilisant une solution contenant un sel de bore et un composé du silicium de type silicone. Ainsi, par exemple (et dans le cas préféré où par exemple le précurseur est un catalyseur de type nickel-molybdène supporté sur un support contenant de la zéolithe et de l'alumine) il est possible d'imprégner ce précurseur par de la solution aqueuse de biborate d'ammonium et de silicone Rhodorsil E1P de la société Rhône Poulenc, de procéder à un séchage par exemple à 80°C, puis d'imprégner par une solution de fluorure d'ammonium, de procéder à un séchage par exemple à 80°C, et de procéder à une calcination par exemple et de façon préférée sous air en lit traversé, par exemple à 500°C pendant 4 heures.

Dans le cas où le catalyseur contient au moins un élément du groupe VIIA, on imprègne le mélange par au moins une solution d'au moins un élément du groupe VIIA, avant, après ou simultanément à l'imprégnation par la solution de l'élément promoteur. Il est par exemple possible d'imprégner le catalyseur par une solution de fluorure d'ammonium, de procéder à un séchage par exemple à 80°C, et de procéder à une calcination par exemple et de façon préférée sous air en lit traversé, par exemple à 500°C pendant 4 heures.

D'autres séquences d'imprégnation peuvent être mises en oeuvre pour obtenir le catalyseur de la présente invention.

Dans le cas où le catalyseur contient un élément du groupe VIIB déposé, on imprègne le mélange par au moins une solution d'au moins un élément du groupe VIIB, avant, après ou simultanément à l'imprégnation par la solution de l'élément promoteur.

Dans le cas où les métaux sont introduits en plusieurs imprégnations des sels précurseurs correspondants, une étape de séchage intermédiaire du catalyseur est généralement effectuée à une température généralement comprise entre 60 et 250°C et avantageusement une étape de calcination intermédiaire du catalyseur est généralement effectuée à une température comprise entre 150 et 800 °C, généralement entre 250 et 600 °C.

Généralement, afin de terminer la préparation du catalyseur, on laisse reposer le solide humide sous une atmosphère humide à une température comprise entre 10 et 80°C, puis on sèche le solide humide obtenu à une température comprise entre 60 et 150°C, et enfin on calcine le solide obtenu à une température comprise entre 150 et 800°C, généralement entre 250 et 600 °C.

Un catalyseur préféré de l'invention contient du bore et du silicium, et avantageusement il contient en outre du phosphore. De préférence, il contient également du nickel et du molybdène ou du cobalt et du molybdène, ou du nickel et du tungstène.

De façon préférée, un catalyseur NiMo ou NiMoP sur un support comprenant un mélange d'alumine et de zéolithe bêta est imprégné par une solution aqueuse de bore puis une solution aqueuse de silicium (ou l'inverse solution de silicium puis de bore) ou est imprégnée par une solution aqueuse commune de bore et de silicium. Ainsi, il est possible d'imprégner dans un premier temps la solution contenant le silicium, de sécher, de calciner et d'imprégner la solution contenant le bore de sécher et de procéder à une calcination finale.

Il est également possible d'imprégner dans un premier temps la solution contenant le bore, de sécher, de calciner et d'imprégner la solution contenant le silicium de sécher et de procéder à une calcination finale.

Il est aussi possible d'imprégner dans un premier temps le précurseur avec une solution contenant du phosphore, de sécher, de calciner puis d'imprégner le solide obtenu avec la solution contenant le bore, de sécher, de calciner et d'imprégner la solution contenant le silicium de sécher et de procéder à une calcination finale.

De façon plus particulière, le procédé de préparation du catalyseur de la présente invention comprend les étapes suivantes :

a) on prépare un mélange ci-après dénommé le précurseur, renfermant au moins les composés suivants : au moins une matrice poreuse amorphe ou mal cristallisée, au moins une zéolithe bêta de type structural BEA, au moins un élément du groupe VIB, et éventuellement au moins un élément du groupe VIII, éventuellement au moins un élément du groupe VIIB, éventuellement du phosphore, le tout étant de préférence mis en forme et séché,

b) on imprègne le précurseur défini à l'étape a), par une solution aqueuse contenant du bore et/ou du silicium, éventuellement du phosphore et éventuellement au moins un élément du groupe VIIA,

et avantageusement on termine le procédé de la façon suivante :

c) on laisse reposer le solide humide sous une atmosphère humide à une température comprise entre 10 et 80°C,

d) on sèche le solide humide obtenu à l'étape b) à une température comprise entre 60 et 150°C,

e) on calcine le solide obtenu à l'étape c) à une température comprise entre 150 et 800°C.

L'étape b) ci-dessus peut être réalisée selon les méthodes classiques de l'homme du métier.

L'étape b) nécessite de disposer d'une solution aqueuse contenant du bore et/ou du silicium et donc est différente des méthodes classiques de dépôt du B et/ou du Si connues de l'homme du métier. Une méthode préférée selon l'invention consiste à préparer une solution aqueuse d'au moins un sel de bore tel que le biborate d'ammonium ou le pentaborate d'ammonium en milieu alcalin et en présence d'eau oxygénée et d'introduire dans la solution un composé du silicium de type silicone et à procéder à une imprégnation dite à sec, dans laquelle on remplit le volume des pores du précurseur par la solution contenant le B et le Si. Cette méthode de dépôt du B et du Si est meilleure que la méthode conventionnelle employant une solution alcoolique d'acide borique ou une solution d'orthosilicate d'éthyle dans l'alcool.

Les catalyseurs obtenus par la présente invention sont mise en forme sous la forme de grains de différentes formes et dimensions. Ils sont utilisés en général sous la forme d'extrudés cylindriques ou polylobés tels que bilobés, trilobés, polylobés de forme droite ou torsadée, mais peuvent éventuellement être fabriqués et employés sous la forme de poudre concassées, de tablettes, d'anneaux, de billes, de roues. Ils présentent une surface spécifique mesurée par adsorption d'azote selon la méthode BET (Brunauer, Emmett, Teller, J. Am. Chem. Soc., vol. 60, 309-316 (1938)) comprise entre 50 et 600 m$^2$/g, un volume poreux mesuré par porosimétrie au mercure compris entre 0,2 et 1,5 cm$^3$/g et une distribution en taille de pores pouvant être monomodale, bimodale ou polymodale.

L'invention concerne également un procédé de conversion de charges hydrocarbonées avec le catalyseur ci-dessus décrit et en particulier les procédés d'hydrocraquage des charges hydrocarbonées.

Les catalyseurs obtenus par la présente invention sont utilisables pour l'hydrocraquage de charges hydrocarbonées telles que les coupes pétrolières. Les charges employées dans le procédé sont par exemple des essences, des kérosènes, des gas-oils, des gas-oils sous vide, des résidus atmosphériques, des résidus sous vide, des distillats atmosphériques, des distillats sous vide, des fuels lourds, des huiles, des cires et des paraffines, des huiles usagées, des résidus ou des bruts désasphaltés, des charges provenant des procédés de craquage thermique (sans hydrogène) ou de craquage catalytique en lit fluidisé (FCC) et leurs mélanges. Elles contiennent des hétéroatomes tels que soufre, oxygène et azote et éventuellement des métaux.

Les catalyseurs ainsi obtenus sont utilisés avantageusement pour l'hydrocraquage en particulier de coupes hydrocarbonées lourdes de type distillats sous vide, résidus désasphaltés ou hydrotraités ou équivalents. Les coupes lourdes sont de préférence constituées d'au moins de 80% en volume de composés dont les points d'ébullition sont d'au moins 350°C et de préférence entre 350 et 580 °C (c'est-à-dire correspondant à des composés contenant au moins 15 à 20 atomes de carbone). Elles contiennent généralement des hétéroatomes tels que soufre et azote. La teneur en azote est usuellement comprise entre 1 et 5000 ppm poids et la teneur en soufre entre 0,01 et 5% poids.

Les conditions de l'hydrocraquage telles que température, pression, taux de recyclage d'hydrogène, vitesse volumique horaire, pourront être très variables en fonction de la nature de la charge, de la qualité des produits désirés et des installations dont dispose le raffineur. La température est en général supérieure à 200°C et souvent comprise entre 250°C et 480°C. La pression est supérieure à 0,1 MPa et souvent supérieure à 1 MPa. Le taux de recyclage d'hydrogène est au minimum de 50 et souvent compris entre 80 et 5000 normaux litres d'hydrogène par litre de charge. La vitesse volumique horaire est comprise en général entre 0,1 et 20 volume de charge par volume de catalyseur et par heure.

Les catalyseurs de la présente invention sont de préférence soumis à un traitement de sulfuration permettant de transformer, au moins en partie, les espèces métalliques en sulfure avant leur mise en contact avec la charge à traiter. Ce traitement d'activation par sulfuration est bien connu de l'Homme du métier et peut être effectué par toute méthode déjà décrite dans la littérature.

Une méthode de sulfuration classique bien connue de l'homme du métier consiste à chauffer en présence d'hydrogène sulfuré à une température comprise entre 150 et 800°C, de préférence entre 250 et 600°C, généralement dans une zone réactionnelle à lit traversé.

Le catalyseur de la présente invention peut être avantageusement employé pour l'hydrocraquage de coupes de type distillats sous vide fortement chargée en soufre et azote.

Dans un premier mode de réalisation ou d'hydrocraquage partiel encore appellé hydrocraquage doux, le niveau de conversion est inférieur à 55%. Le catalyseur selon l'invention est alors employé à une température en général supérieure ou égale à 230°C et de préférence à 300°C, généralement d'au plus 480°C, et souvent comprise entre 350°C et 450°C. La pression est en général supérieure à 2MPa et de préférence 3MPa, elle est inférieure à 12MPa et de préférence inférieure à 10MPa. La quantité d'hydrogène est au minimum de 100 normaux litre d'hydrogène par litre de charge et souvent comprise entre 200 et 3000 normaux litre d'hydrogène par litre de charge. La vitesse volumique horaire est comprise en général entre 0,1 et $10h^{-1}$. Dans ces conditions, les catalyseurs de la présente invention présentent une meilleure activité en conversion, en hydrodésulfuration et en hydrodéazotation que les catalyseurs commerciaux.

Dans un second mode de réalisation, le catalyseur de la présente invention peut être employé pour l'hydrocraquage partiel, avantageusement dans des conditions de pression d'hydrogène modérée, de coupes par exemple de type distillats sous vide fortement chargées en soufre et azote qui ont été préalablement hydrotraitées. Dans ce mode d'hydrocraquage le niveau de conversion est inférieur à 55%. Dans ce cas le procédé de conversion de coupe pétrolière se déroule en deux étapes, les catalyseurs selon l'invention étant utilisés dans la deuxième étape. Le catalyseur de la première étape a une fonction d'hydrotraitement et comprend une matrice de préférence à base d'alumine, et de préférence ne contenant pas de zéolithe, et au moins un métal ayant une fonction hydrogénante. Ladite matrice est choisie dans le groupe formé par l'alumine, la silice-alumine, la magnésie, la zircone, l'oxyde de titane, les aluminates. La fonction d'hydrotraitement est assurée par au moins un métal ou composé de métal du groupe VIII tels que le nickel et le cobalt notamment. On peut utiliser une combinaison d'au moins un métal ou composé de métal du groupe VI (notamment le molybdène ou le tungstène) et d'au moins un métal ou composé de métal du groupe VIII (notamment le cobalt ou le nickel) de la classification périodique des éléments. La concentration totale en oxydes de métaux des groupes VI et VIII est comprise entre 5 et 40 % en poids et de préférence entre 7 et 30 % en poids et le rapport pondéral exprimé en oxyde métallique en métal (ou métaux) du groupe VI sur métal (ou métaux) du groupe VIII est compris entre 1,25 et 20 et de préférence entre 2 et 10. De plus, ce catalyseur peut contenir du phosphore. La teneur en phosphore, exprimée en concentration en pentaoxyde de diphosphore $P_2O_5$ sera d'au plus 15% généralement, de préférence comprise entre 0.1 et 15 % en poids et de préférence comprise entre 0,15 et 10% en poids. Il peut également contenir du bore dans un rapport B/P = 1,05 - 2 (atomique), la somme des teneurs en B et P exprimée en oxydes étant de 5-15 % poids.

La première étape se déroule généralement à une température de 350-460°C, de préférence 360-450°C, une pression totale d'au moins 2MPa; et de préférence 3 MPa, une vitesse volumique horaire de 0,1-5h$^{-1}$ et de préférence 0.2-2h$^{-1}$ et avec une quantité d'hydrogène d'au moins 100Nl/Nl de charge, et de préférence 260-3000Nl/Nl de charge.

Dans ce second mode de réalisation, pour l'étape de conversion avec le catalyseur selon l'invention (ou seconde étape), les températures sont en général supérieures ou égales à 230°C et souvent comprises entre 300°C et 430°C. La pression est en général d'au moins 2MPa et de préférence 3MPa, elle est inférieure à 12MPa et de préférence inférieure à 10MPa. La quantité d'hydrogène est au minimum de 100l/l de charge et souvent comprise entre 200 et 3000l/l d'hydrogène par litre de charge. La vitesse volumique horaire est comprise en général entre 0,15 et 10h$^{-1}$. Dans ces conditions, les catalyseurs de la présente invention présentent une meilleure activité en conversion, en hydrodésulfuration, en hydrodéazotation et une meilleure sélectivité en distillats moyens que les catalyseurs commerciaux. La durée de vie des catalyseurs est également améliorée dans la plage de pression modérée.

Dans un autre mode de réalisation, le catalyseur de la présente invention peut être employé pour l'hydrocraquage dans des conditions de pression élevées d'au moins 5 Mpa, de préférence d'au moins 10 Mpa, et avantageusement d'au moins 12 MPa. Les coupes traitées sont par exemple de type distillats sous vide fortement chargée en soufre et azote qui ont été préalablement hydrotraitées. Dans ce mode d'hydrocraquage le niveau de conversion est supérieur ou égal à 55%. Dans ce cas, le procédé de conversion de coupe pétrolière se déroule en deux étapes, le catalyseur selon l'invention étant utilisé dans la deuxième étape.

Le catalyseur de la première étape est identique à celui-ci décrit précédemment et utilisé dans les conditions décrites, la pression étant ajustée à celle de cet autre mode de réalisation.

Pour l'étape de conversion avec le catalyseur selon l'invention (ou seconde étape), les températures sont en général supérieures ou égales à 230°C et souvent comprises entre 300°C et 430°C. La quantité d'hydrogène est au minimum de 100l/l de charge et souvent comprise entre 200 et 3000l/l d'hydrogène par litre de charge. La vitesse volumique horaire est comprise en général entre 0,15 et 10h$^{-1}$.

Dans ces conditions, les catalyseurs de la présente invention présentent une meilleure activité en conversion et une meilleure sélectivité en distillats moyens que les catalyseurs commerciaux, même pour des teneurs en zéolithe considérablement plus faibles que celles des catalyseurs commerciaux.

Les exemples suivants illustrent la présente invention sans toutefois en limiter la portée.

Exemple 1 : Préparation d'un support contenant une zéolithe bêta

Un support de catalyseur d'hydrocraquage contenant une zéolithe bêta a été fabriqué en grande quantité de façon à pouvoir préparer différents catalyseurs à base du même support. Pour cela on utilise 18,9 % poids d'une zéolithe bêta possédant un rapport Si/Al global (mesuré par fluorescence X) de 23,1, un rapport atomique mesuré par adsorption atomique de Na/Al=0,003, une surface BET de 720 m$^2$/g et un volume poreux de 0,298ml d'azote liquide/g (à la température de l'azote liquide) à P/Po=0,14, que l'on mélange à 81,1 % poids d'une matrice composée de boehmite tabulaire ultrafine ou gel d'alumine commercialisée sous le nom SB3 par la société Condéa Chemie Gmbh. Ce mélange de poudre a été ensuite mélangé à une solution aqueuse contenant de l'acide nitrique à 66% ( 7% poids d'acide par gramme de gel sec) puis malaxé pendant 15 minutes. A l'issue de ce malaxage, la pâte obtenue est passée à travers une filière ayant des orifices cylindriques de diamètre égal à 1,4 mm. Les extrudés sont ensuite séchés pendant une nuit à 120°C puis calcinés à 550°C pendant 2 heures sous air humide contenant 7,5% volume d'eau. On obtient ainsi des extrudés cylindriques de 1,2 mm de diamètre, ayant une surface spécifique de 286 m$^2$/g, un volume poreux de 0,39 cm$^3$/g et une distribution en taille de pore monomodale centrée sur 11 nm. L'analyse de la matrice par la diffraction des rayons X révèle que celle ci est composée d'alumine gamma cubique de faible cristallinité et de zéolithe bêta.

Exemple 2 : Préparation de catalyseurs d'hydrocraguage contenant une zéolithe bêta

Les extrudés de support contenant une zéolithe bêta de l'exemple 1 sont imprégnés à sec par une solution aqueuse d'un mélange d'heptamolybdate d'ammonium et de nitrate de nickel, séchés une nuit à 120°C sous air et enfin calcinés sous air à 550°C. Les teneurs pondérales en oxydes du catalyseur CZ4 obtenus sont indiquées dans le tableau 1.

Nous avons imprégné l'échantillon de catalyseur CZ4 par une solution aqueuse renfermant du biborate d'ammonium de manière à déposer environ 1,7% masse de B$_2$O$_3$. Après maturation à température ambiante dans une atmosphère saturée en eau, les extrudés imprégnés sont séchés pendant une nuit à 120°C puis calcinés à 550°C pendant 2 heures sous air sec. On obtient un catalyseur nommé CZ4B : NiMo/alumine-bêta dopée au bore. Un catalyseur CZ4Si a été obtenu par la même procédure que le catalyseur CZ4B ci-dessus mais en remplaçant dans la solution d'imprégnation le précurseur de bore par l'émulsion de silicone Rhodorsil EP1. Pour ce catalyseur, on cherche à déposer une quantité de silicium d'environ 1,6% en masse de SiO$_2$.

Les extrudés de support contenant une zéolithe bêta de l'exemple 1 sont imprégnés à sec par une solution aqueuse d'un mélange d'heptamolybdate d'ammonium, de nitrate de nickel et d'acide orthophosphorique, séchés une nuit à 120°C sous air et enfin calcinés sous air à 550°C. Le catalyseur CZ4P est ainsi obtenu.

Nous avons imprégné l'échantillon de catalyseur CZ4P par une solution aqueuse renfermant du biborate d'ammonium de manière à déposer environ 1,7% masse de $B_2O_3$. Après maturation à température ambiante dans une atmosphère saturée en eau, les extrudés imprégnés sont séchés pendant une nuit à 120°C puis calcinés à 550°C pendant 2 heures sous air sec. On obtient un catalyseur nommé CZ4PB : NiMo/alumine-bêta dopée au bore. Un catalyseur CZ4PSi a été obtenu par la même procédure que le catalyseur CZ4PB ci-dessus mais en remplaçant dans la solution d'imprégnation le précurseur de bore par l'émulsion de silicone Rhodorsil EP1. Pour ce catalyseur, on cherche à déposer une quantité de silicium promoteur d'environ 1,5% en masse de $SiO_2$. Enfin, un catalyseur CZ4PBSi a été obtenu par la même procédure que les catalyseurs ci-dessus mais en utilisant une solution aqueuse renfermant le biborate d'ammonium et l'émulsion de silicone Rhodorsil EP1 et les même conditions opératoires. On ajoute ensuite à ce catalyseur du fluor par imprégnation d'une solution d'acide fluorhydrique diluée de manière à déposer environ 1 % en poids de fluor. Après séchage pendant une nuit à 120°C et calcination à 550°C pendant 2 heures sous air sec on obtient le catalyseur CZ4PBSiF. Les teneurs finales en oxydes des catalyseurs CZ4 sont indiquées dans le tableau 1.

Tableau 1 :

| Caractéristiques des catalyseurs CZ4 | | | | | | | | |
|---|---|---|---|---|---|---|---|---|
| Catalyseur | CZ4 | CZ4 P | CZ4 Si | CZ4 B | CZ4 PB | CZ4 PSi | CZ4 PBSi | CZ4 PBSiF |
| $MoO_3$ (% pds) | 14,2 | 13,6 | 13,9 | 13,9 | 13,4 | 13,4 | 13,2 | 13,1 |
| NiO (% pds) | 3,5 | 3,4 | 3,4 | 3,4 | 3,3 | 3,3 | 3,3 | 3,2 |
| $P_2O_5$(% pds) | 0 | 4,2 | 0 | 0 | 4,1 | 4,1 | 4,1 | 4,0 |
| $B_2O_3$(% pds) | 0 | 0 | 0 | 1,85 | 1,7 | 0 | 1,7 | 1,6 |
| $SiO_2$(% pds) | 15,0 | 14,3 | 16,3 | 14,6 | 14,0 | 15,9 | 15,2 | 15,1 |
| F (% pds) | 0 | 0 | 0 | 0 | 0 | 0 | 0 | 0,95 |
| Complément à 100% composé majoritairement de $Al_2O_3$ (% pds) | 67,3 | 6 4,5 | 66,3 | 66,1 | 63,5 | 63,3 | 62,5 | 62,05 |
| Zéolite bêta (% pds) | 15,5 | 14,9 | 15,3 | 15,3 | 14,6 | 14,7 | 14,4 | 14,3 |

Le catalyseur CZ4P a ensuite été imprégné par une solution aqueuse renfermant du nitrate de manganèse de manière à déposer environ 1,4% en masse de $MnO_2$.

Après maturation à température ambiante dans une atmosphère saturée en eau, les extrudés imprégnés sont séchés pendant une nuit à 120°C puis calcinés à 550°C pendant 2 heures sous air sec. On obtient un catalyseur nommé CZ4PMn. On imprègne ensuite ce catalyseur par une solution aqueuse renfermant le biborate d'ammonium et l'émulsion de silicone Rhodorsil EP1(Rhone-Poulenc) de manière à déposer environ 1,9% masse de B2O3 et 1,9% masse de SiO2. Les extrudés imprégnés sont alors séchés pendant une nuit à 120°C puis calcinés à 550°C pendant 2 heures sous air sec et on obtient le catalyseur CZ4PMnBSi. On ajoute ensuite à ce catalyseur du fluor par imprégnation d'une solution d'acide fluorhydrique diluée de manière à déposer environ 1 % en masse de fluor. Après séchage pendant une nuit à 120°C et calcination à 550°C pendant 2 heures sous air sec on obtient le catalyseur CZ4PMnBSiF. Les teneurs pondérales de ces catalyseurs sont indiquées dans le tableau 2.

Tableau 2 :

| Caractéristiques des catalyseurs CZ4 contenant du manganèse | | | |
|---|---|---|---|
| Catalyseur | CZ4 PMn | CZ4 PMnBSi | CZ4 PMnBSiF |
| $MoO_3$(% pds) | 13,4 | 12,9 | 12,8 |
| NiO (% pds) | 3,3 | 3,2 | 3,2 |
| $MnO_2$ (% pds) | 1,3 | 1,3 | 1,2 |

Tableau 2 :   (suite)

| Caractéristiques des catalyseurs CZ4 contenant du manganèse | | | |
|---|---|---|---|
| Catalyseur | CZ4 PMn | CZ4 PMnBSi | CZ4 PMnBSiF |
| P$_2$O$_5$ (% pds) | 4,2 | 4,0 | 4,0 |
| B$_2$O$_3$ (% pds) | 0 | 1,9 | 1,8 |
| SiO$_2$ (% pds) | 14,1 | 15,3 | 15,1 |
| F (%pds) | 0 | 0 | 1,15 |
| Complément à 100% composé majoritairement de Al$_2$O$_3$ (% pds) | 63,7 | 61,4 | 61,9 |
| Zéolite bêta (% pds) | 14,7 | 14,2 | 14,0 |

L'analyse, par microsonde électronique, des catalyseurs CZ4PSi, CZ4PBSi, CZ4PBSiF (tableau1), et des catalyseurs CZ4PMnBSi, CZ4PMnBSiF (tableau 2) montre que le silicium ajouté au catalyseur selon l'invention est principalement localisé sur la matrice et se trouve sous forme de silice amorphe

Exemple 3 : Comparaison des catalyseurs en hydrocraquage d'un gazole sous vide à conversion partielle.

Les catalyseurs dont les préparations sont décrites dans les exemples précédents sont utilisés dans les conditions de l'hydrocraquage à pression modérée sur une charge pétrolière dont les principales caractéristiques sont les suivantes :

| | |
|---|---|
| Densité (20/4) | 0,921 |
| Soufre (% poids) | 2,46 |
| Azote (ppm poids) | 1130 |
| Distillation simulée point initial | 365°C |
| point 10 % | 430°C |
| point 50 % | 472°C |
| point 90 % | 504°C |
| point final | 539°C |
| point d'écoulement | + 39°C |

L'unité de test catalytique comprend deux réacteurs en lit fixe, à circulation ascendante de la charge ("up-flow). Dans le premier réacteur, celui dans lequel la charge passe en premier, on introduit le catalyseur de première étape d'hydrotraitement HTH548 vendu par la société Procatalyse comprenant un élément du groupe VI et un élément du groupe VIII déposés sur alumine. Dans le second réacteur, celui dans lequel la charge passe en dernier, on introduit un catalyseur d'hydrocraquage décris ci-dessus. Dans chacun des réacteurs, on introduit 40 ml de catalyseur. Les deux réacteurs fonctionnement à la même température et à la même pression. Les conditions opératoires de l'unité de test sont les suivantes :

| | |
|---|---|
| Pression totale | 5 MPa |
| Catalyseur d'hydrotraitement | 40 cm$^3$ |
| Catalyseur d'hydrocraquage | 40 cm$^3$ |
| Température | 400°C |
| Débit d'hydrogène | 20 l/h |
| Débit de charge | 40 cm$^3$/h |

Les deux catalyseurs subissent une étape de sulfuration in-situ avant réaction. Notons que toute méthode de sulfuration in-situ ou ex-situ est convenable. Une fois la sulfuration réalisée, la charge décrite ci-dessus peut être transformée.

Les performances catalytiques sont exprimées par la conversion brute à 400°C (CB), par la sélectivité brute en distillats moyens (SB) et par les conversions en hydrodésulfuration (HDS) et en hydrodéazotation (HDN). Ces performances catalytiques sont mesurées sur le catalyseur après qu'une période de stabilisation, généralement au moins 48 heures, ait été respectée.

La conversion brute CB est prise égale à :

$$CB = \% \text{ pds de } 380°C^{-} \text{ de l'effluent}$$

La fraction $380°C^{-}$ de l'effluent signifiant la partie de l'effluent bouillant au dessous de 380°C.

La sélectivité brute SB en distillats moyens est prise égale à :

$$SB = 100*\text{poids de la fraction } (150°C\text{-}380°C)/\text{poids de la fraction } 380°C^{-} \text{ de l'effluent}$$

La conversion en hydrodésulfuration HDS est prise égale à :

$$HDS = (S_{initial} - S_{effluent}) / S_{initial} * 100 = (24600 - S_{effluent})/24600 * 100$$

La conversion en hydrodéazotation HDN est prise égale à :

$$HDN = (N_{initial} - N_{effluent}) / N_{initial} * 100 = (1130 - N_{effluent})/1130 * 100$$

Dans le tableau 3 suivant, nous avons reporté la conversion brute CB à 400°C, la sélectivité brute SB, la conversion en hydrodésulfuration HDS et la conversion en hydrodéazotation HDN pour les quatre catalyseurs.

Tableau 3

| Activités catalytiques des catalyseurs en hydrocraquage partiel à 400°C | | | | | |
|---|---|---|---|---|---|
| | | CB (%pds) | SB (%) | HDS (%) | HDN (%) |
| CZ4 | NiMo/Bêta | 50,0 | 65,0 | 98,95 | 96,1 |
| CZ4P | NiMoP/Bêta | 50,2 | 65,0 | 99,21 | 96,9 |
| CZ4B | NiMoB/Bêta | 50,3 | 65,2 | 99,1 | 96,7 |
| CZ4Si | NiMoSi/Bêta | 50,4 | 65,0 | 99,15 | 96,9 |
| CZ4PB | NiMoPB/Bêta | 50,4 | 64,0 | 99,25 | 97,7 |
| CZ4PSi | NiMoPSi/Bêta | 50,4 | 64,5 | 99,35 | 98,4 |
| CZ4PBSi | NiMoPBSi/Bêta | 50,9 | 64,1 | 99,52 | 98,9 |

Les résultats du tableau 3 montrent que l'association des dopants B et/ou Si apporte une amélioration des performances du catalyseur en conversion, avec une diminution tolérable de la sélectivité brute en distillats moyen.

De plus, les résultats du tableau 3 montrent qu'il est particulièrement avantageux d'introduire le silicium sur un précurseur contenant déjà les éléments du groupe VIB et/ou VIII et éventuellement au moins l'un des éléments P, B et F.

Les catalyseurs à base de zéolithe bêta de l'invention contenant un élément promoteur permettant d'améliorer les performances des catalyseurs d'hydrocraquage, et ceux contenant du phosphore et du bore et/ou du silicium sont donc particulièrement intéressants pour l'hydrocraquage partiel de charge de type distillats sous vide contenant de l'azote et en particulier sous une pression d'hydrogène modérée.

Exemple 4 : Comparaison des catalyseurs en hydrocraquage d'un gazole sous vide à haute conversion

Les catalyseurs dont les préparations sont décrites aux exemples précédents sont utilisés dans les conditions de l'hydrocraquage à conversion élevée (60-100%). La charge pétrolière est un distillat sous vide hydrotraité dont les principales caractéristiques sont les suivantes :

| | |
|---|---|
| Densité (20/4) | 0,869 |
| Soufre (ppm poids) | 502 |

(suite)

| Azote (ppm poids) | 10 |
|---|---|
| Distillation simulée point initial | 298 °C |
| point 10 % | 369 °C |
| point 50 % | 427 °C |
| point 90 % | 481 °C |
| point final | 538 °C |

Cette charge a été obtenue par hydrotraitement d'un distillat sous vide sur un catalyseur HR360 vendu par la société Procatalyse comprenant un élément du groupe VI et un élément du groupe VIII déposés sur alumine.

On ajoute ensuite à cette charge 0,6% poids d'aniline et 2% poids de dimethyldisulfure afin de simuler les pressions partielles d'HS2 et d'NH3 présente dans la deuxième étape d'hydrocraquage. La charge ainsi préparée est injectée dans l'unité de test d'hydrocraquage qui comprend un réacteur en lit fixe, à circulation ascendante de la charge ("up-flow"), dans lequel est introduit 80 ml de catalyseur. Le catalyseur est sulfuré par un mélange n-hexane/DMDS+aniline jusqu'à 320°C. Notons que toute méthode de sulfuration in-situ ou ex-situ est convenable. Une fois la sulfuration réalisée, la charge décrite ci-dessus peut être transformée. Les conditions opératoires de l'unité de test sont les suivantes :

| Pression totale | 9 MPa |
|---|---|
| Catalyseur | 80 cm$^3$ |
| Température | 360-420°C |
| Débit d'hydrogène | 80 l/h |
| Débit de charge | 80 cm$^3$/h |

Les performances catalytiques sont exprimées par la température qui permet d'atteindre un niveau de conversion brute de 70 % et par la sélectivité brute en distillats moyen 150-380°C. Ces performances catalytiques sont mesurées sur le catalyseur après qu'une période de stabilisation, généralement au moins 48 heures, ait été respectée.

La conversion brute CB est prise égale à :

$$CB = \% \text{ pds de } 380°C^- \text{ de l'effluent}$$

La sélectivité brute SB en distillat moyen est prise égale à :

$$SB = 100*\text{poids de la fraction } (150°C\text{-}380°C)/\text{poids de la fraction } 380°C^- \text{ de l'effluent}$$

La température de réaction est fixée de façon à atteindre une conversion brute CB égale à 70% poids. Dans le tableau 4 suivant, nous avons reporté la température de réaction et la sélectivité brute pour les catalyseurs décrits précédemment.

Tableau 4 :

| Activités catalytiques des catalyseurs en hydrocraquage haute conversion (70%) | | | |
|---|---|---|---|
| | | T(°C) | SB (%) |
| CZ4 | NiMo/bêta | 369 | 51,2 |
| CZ4P | NiMoP/bêta | 369 | 51,5 |
| CZ4PB | NiMoPB/bêta | 367 | 52,1 |
| CZ4PSi | NiMoPSi/bêta | 367 | 52,4 |
| CZ4PBSi | NiMoPBSi/bêta | 366 | 53,5 |
| CZ4PBSiF | NiMoPBSiF/bêta | 365 | 54,8 |
| CZ4PMn | NiMoPMn/bêta | 367 | 53,2 |

## EP 0 955 093 B1

Tableau 4 :   (suite)

| Activités catalytiques des catalyseurs en hydrocraquage haute conversion (70%) | | | |
|---|---|---|---|
| | | T(°C) | SB (%) |
| CZ4PMnBSi | NiMoPMnBSi/bêta | 366 | 54,1 |
| CZ4PMnBSiF | NiMoPMnBSiF/bêta | 364 | 55,2 |

L'ajout de bore et/ou de silicium au catalyseur contenant la zéolithe bêta et l'élément hydro-déshydrogénant permet d'améliorer l'activité en conversion, ce qui se traduit par une diminution de la température de réaction nécessaire pour atteindre 70% de conversion et permet d'obtenir une meilleure sélectivité brute en distillats moyens.

L'ajout de l'élément promoteur au catalyseur contenant la zéolithe bêta permet d'améliorer l'activité en conversion, ce qui se traduit par une diminution de la température de réaction nécessaire pour atteindre 70% de conversion et permet d'obtenir une meilleure sélectivité brute en distillats moyens. De plus, si l'on ajoute du manganèse on constate également une amélioration de l'activité convertissante avec une nette amélioration de la sélectivité brute en distillats moyens. Ces effets d'amélioration sont encore renforcés par la présence de fluor. On note l'intérêt de la combinaison phosphore avec bore et/ou silicium. Sans vouloir être lié à une théorie particulière, on attribue cet effet à une fonction hydrogénante exaltée par le et les éléments promoteurs, éventuellement en présence de Mn et/ou F.

Les catalyseurs selon l'invention sont donc particulièrement intéressants pour l'hydrocraquage à haute conversion de charge de type distillats sous vide, notamment à une pression d'hydrogène modérée.

Exemple 5

Un support est préparé de la même façon que dans l'exemple 1 mais avec une zéolite bêta désaluminée de rapport Si/Al = 42 obtenue par attaque directe à l'acide nitrique 1N, 10 ml/g de zéolite, à reflux 4h d'une zéolite bêta synthétisée avec un rapport Si/Al de 15, 3.

La zéolite désaluminée obtenue est lavée puis utilisée pour préparer des extrudats comme dans l'exemple 1 avec les mêmes proportions.

Sur le support, on dépose ensuite du phosphore, du bore et du silicium de la même façon que dans l'exemple 2 et dans les mêmes quantités, et l'ensemble est traité comme dans l'exemple 2. Un catalyseur CZ4'PBSi est obtenu.

Le catalyseur est soumis au test de l'exemple 4.

Pour 70 % de conversion, la température est de 369°C et la selectivité de 54,0 % pds.

La catalyseur à base de zéolite bêta désaluminée est le plus performant.

**Revendications**

1. Catalyseur comprenant au moins une matrice, une zéolithe béta, au moins un métal hydro-déshydrogénant, et au moins un élément promoteur déposé sur la matrice du catalyseur choisi dans le groupe formé par le bore, le silicium et le phosphore.

2. Catalyseur selon la revendication 1 dans lequel la zéolithe bêta est désaluminée.

3. Catalyseur selon la revendication 1, comprenant en outre au moins un métal du groupe VIIB.

4. Catalyseur selon l'une des revendications précédentes, comprenant en outre au moins un halogène.

5. Catalyseur selon l'une des revendications précédentes, comprenant en % poids par rapport à la masse totale de catalyseur :

   - 0,1 à 60 % (exprimé en % pds d'oxyde) d'au moins un métal hydro-déshydrogénant choisi dans le groupe formé par les métaux des groupes VIB et VIII
   - 0,1 à 99 % d'au moins une matrice poreuse amorphe ou mal cristallisée,
   - 0,1 à 99,7 % de zéolithe bêta,
   - 0,1 à 20 % (exprimé en % pds d'oxyde) d'au moins un élément promoteur choisi dans le groupe formé par le bore, le silicium et le phosphore,
   - 0 à 20 % d'au moins un halogène,

-    0 à 20 % (exprimé en % pds d'oxyde) d'au moins un élément du groupe VIIB.

6.   Catalyseur selon l'une des revendications précédentes comprenant du bore et du silicium comme éléments promoteurs.

7.   Catalyseur selon la revendication 6 comprenant en outre du phosphore

8.   Catalyseur selon l'une des revendications précédentes, dans lequel la matrice est choisie dans le groupe formé par l'alumine, la silice-alumine, la silice, les aluminates.

9.   Catalyseur selon la revendication 4, dans lequel l'halogène est le fluor.

10.  Catalyseur selon l'une des revendications précédentes, dans lequel le métal du groupe VII B est le manganèse.

11.  Catalyseur selon l'une des revendications précédentes dans lequel les éléments hydro-déshydrogénants sont choisis parmi les combinaisons nickel-molybdène, nickel-tungstène, cobalt-molybdène, cobalt-tungstène, nickel-cobalt-molybdène.

12.  Procédé de préparation d'un catalyseur selon l'une des revendications 1 à 11 dans lequel on prépare un mélange d'au moins une matrice, une zéolithe bêta et éventuellement au moins un métal hydro-déshydrogénant choisi parmi les métaux du groupe VIII et du groupe VIB, on imprègne ledit mélange avec au moins une solution contenant au moins un élément promoteur choisi parmi le bore, le silicium et le phosphore.

13.  Procédé de préparation selon la revendication 12 dans lequel on imprègne le mélange par au moins une solution d'au moins un élément du groupe VIIA, avant, après ou simultanément à l'imprégnation par la solution de l'élément promoteur

14.  Procédé de préparation selon l'une des revendications 12 ou 13 dans lequel on imprègne le mélange par au moins une solution d'au moins un élément du groupe VIIB, avant, après ou simultanément à l'imprégnation par la solution de l'élément promoteur

15.  Procédé de préparation selon la revendication 12 dans lequel le mélange contient également le(les) élément(s) du groupe VIIB.

16.  Procédé de préparation selon l'une des revendications 12 à 15, dans lequel le mélange contient également du phosphore et est imprégné par au moins une solution contenant du bore et par au moins une solution contenant du silicium.

17.  Procédé pour la conversion des hydrocarbures avec un catalyseur selon l'une des revendications 1à 11 ou avec un catalyseur préparé selon l'une des revendications 12 à 16.

18.  Procédé selon la revendication 17 pour l'hydrocraquage.

19.  Procédé la revendication 18, opérant à au moins 200°C sous une pression supérieure à 0,1 MPa, avec un taux de recyclage hydrogène d'au moins 50 et une vitesse volumique horaire de 0,1-20 h$^{-1}$.

20.  Procédé selon l'une des revendications 18 à 19, opérant à une température d'au moins 230°C, sous une pression de plus de 2 MPa et inférieure à 12 Mpa, avec une vitesse volumique horaire de 0,1-10 h$^{-1}$ et une quantité d'hydrogène d'au mois 100 Nl/l de charge, et de façon à ce que le niveau de conversion soit inférieur à 55%.

21.  Procédé selon l'une des revendications 18 à 19, opérant à une température d'au moins 230°C, une pression d'au moins 5 Mpa, la vitesse volumique horaire de 0,15 - 10 h$^{-1}$ et la quantité d'hydrogène d'au moins 100 l/l de charge, et de façon à ce que le niveau de conversion soit supérieur ou égal à 55%.

22.  Procédé selon l'une des revendications 18 à 19, opérant sur une charge hydrocarbonée choisie parmi les essences, les kérosènes, les gazoles, les gazoles sous vide, les résidus atmosphériques, les résidus sous vide, les distillats atmosphériques, les distillats sous vide, les fuels lourds, les huiles, les cires, les paraffines, les huiles usagées, les résidus désasphaltés, les bruts désasphaltés.

**EP 0 955 093 B1**

**Patentansprüche**

1. Katalysator, umfassend wenigstens eine Matrix, einen Beta-Zeolith, wenigstens ein hydrierendes/ dehydrierendes Metall und wenigstens ein Promotorelement, abgeschieden auf der Matrix des Katalysators und gewählt aus der Gruppe, die gebildet ist durch Bor, Silizium und Phosphor.

2. Katalysator nach Anspruch 1, bei dem der Beta-Zeolith desaluminiert ist.

3. Katalysator nach Anspruch 1, außerdem umfassend wenigstens ein Metall der Gruppe VIIB.

4. Katalysator nach einem der vorhergehenden Ansprüche, im übrigen wenigstens ein Halogen umfassend.

5. Katalysator nach einem der vorhergehenden Ansprüche, der in Gew.-% im Verhältnis zur Gesamtmasse des Katalysators umfasst:

   - 0,1 bis 60% (ausgedrückt in Oxidgewichtsprozent ) von wenigstens einem hydrierenden/dehydrierenden Metall, gewählt aus der Gruppe, die gebildet wird durch die Metalle der Gruppen VIB und VIII,
   - 0,1 bis 99% wenigstens einer porösen, amorphen oder schlecht kristallisierten Matrix,
   - 0,1 bis 99,7% Beta-Zeolith,
   - 0,1 bis 20% (ausgedrückt in Oxidgewichtsprozent ) von wenigstens einem Promotor-Element, gewählt aus der Gruppe, die gebildet wird durch Bor, Silizium und Phosphor,
   - 0 bis 20 von wenigstens einem Halogen,
   - 0 bis 20 % (ausgedrückt in Oxidgewichtsprozent ) von wenigstens einem Element der Gruppe VIIB.

6. Katalysator nach einem der vorhergehenden Ansprüche, umfassend Bor und Silizium als Promotor-Elemente.

7. Katalysator nach Anspruch 6, der außerdem Phosphor umfasst.

8. Katalysator nach einem der vorhergehenden Ansprüche, bei dem die Matrix gewählt ist aus der Gruppe, die gebildet wird durch Aluminiumoxid, Silizium-Aluminiumoxid, Siliziumoxid, Aluminate.

9. Katalysator nach Anspruch 4, bei dem das Halogen Fluor ist.

10. Katalysator nach einem der vorhergehenden Ansprüche, bei dem das Metall der Gruppe VIIB Mangan ist.

11. Katalysator nach einem der vorhergehenden Ansprüche, bei dem die hydrierenden/dehydrierenden Elemente gewählt sind unter den Kombinationen Nickel-Molybdän, Nickel-Wolfram, Kobalt-Molybdän, Kobalt-Wolfram, Nickel-Kobalt-Molybdän.

12. Verfahren zur Herstellung eines Katalysators nach einem der Ansprüche 1 bis 11, bei dem man ein Gemisch aus wenigstens einer Matrix, einem Beta-Zeolith und ggf. wenigstens einem hydrierenden/dehydrierenden Metall herstellt, das unter den Metallen der Gruppe VIII und der Gruppe VIB gewählt ist, man das Gemisch mit wenigstens einer Lösung imprägniert, die wenigstens ein Promotor-Element enthält, das unter Bor, Silizium und Phosphor gewählt ist.

13. Verfahren zur Herstellung nach Anspruch 12, bei dem man das Gemisch durch wenigstens eine Lösung von wenigstens einem Element der Gruppe VIIA imprägniert, vor, nach oder gleichzeitig mit der Imprägnierung durch die Lösung des Promotor-Elements.

14. Verfahren zur Herstellung nach einem der Ansprüche 12 oder 13, bei dem man das Gemisch durch wenigstens eine Lösung von wenigstens einem Element der Gruppe VIIB imprägniert, vor, nach oder gleichzeitig mit der Imprägnierung durch die Lösung des Promotor-Elements.

15. Verfahren zur Herstellung nach Anspruch 12, bei dem das Gemisch das (die) Element(e) der Gruppe VIIB enthält.

16. Verfahren zur Herstellung nach einem der Ansprüche 12 bis 15, bei dem das Gemisch gleichfalls Phosphor enthält und durch wenigstens eine Lösung imprägniert wird, die Bor enthält und durch wenigstens eine siliziumhaltige Lösung.

17. Verfahren zur Umwandlung der Kohlenwasserstoffe mit einem Katalysator gemäß einem der Ansprüche 1 bis 11 oder mit einem Katalysator, der gemäß einem der Ansprüche 12 bis 16 hergestellt ist.

18. Verfahren nach Anspruch 17 zum Hydrocracken.

19. Verfahren nach Anspruch 18, das bei wenigstens 200°C unter einem Druck über 0,1 MPa mit einem Wasserstoff-Rezyklierungsgrad von wenigstens 50 und einer stündlichen Volumengeschwindigkeit von 0,1 bis 20 h$^{-1}$ arbeitet.

20. Verfahren nach einem der Ansprüche 18 bis 19, das bei einer Temperatur von wenigstens 230°C, unter einem Druck von mehr als 2 MPa und unterhalb von 12 MPa mit einer stündlichen Volumengeschwindigkeit von 0,1 bis 10 h$^{-1}$ und einer Wasserstoffmenge von wenigstens 100 l/l-Charge derart arbeitet, dass das Umwandlungsniveau kleiner als 55% ist.

21. Verfahren nach einem der Ansprüche 18 bis 19, das bei einer Temperatur von wenigstens 230°C, einem Druck von wenigstens 5 MPa, der stündlichen Volumengeschwindigkeit von 0,15 bis 10h$^{-1}$ und der Wasserstoffmenge von wenigstens 100 NI/l-Charge derart arbeitet, dass das Umwandlungsniveau größer als oder gleich 55% ist.

22. Verfahren nach einem der Ansprüche 18 bis 19, das auf einer Kohlenwasserstoffcharge arbeitet, die gewählt ist unter den Benzinen, Kerosinen, Diesel, Vakuumgasölen, atmosphärischen Rückständen, Vakuumrückständen, atmosphärischen Destillaten, Vakuumdestillaten, schweren Treibstoffen, Ölen, Wachsen, Paraffinen, verbrauchten Ölen, deasphaltierten Rückständen, deasphaltierten Rohölen.

**Claims**

1. A catalyst comprising at least one matrix, a beta zeolite, at least one hydro-dehydrogenating metal, and at least one promoter element deposited on the matrix of the catalyst, selected from the group formed by boron, silicon and phosphorous.

2. A Catalyst according to claim 1, wherein the beta zeolite is dealuminated.

3. A catalyst according to claim 1, further comprising at least one group VIIB metal.

4. A catalyst according to any one of the preceding claims, further comprising at least one halogen.

5. A catalyst according to any one of the preceding claims comprising, in weight % with respect to the total catalyst weight:

   - 0.1% to 60% (expressed as the % by weight of oxide) of at least one hydro-dehydrogenating metal selected from the group formed by group VIB and VIII metals;
   - 0.1% to 99% of at least one amorphous or low crystallinity porous matrix;
   - 0.1% to 99.7% of beta zeolite;
   - 0.1% to 20% (expressed as the % by weight of oxide) of at least one promoter element selected from the group formed by boron, silicon and phosphorous;
   - 0 to 20% of at least one halogen;
   - 0 to 20% (expressed as the % by weight of oxide) of at least one group VIIB element.

6. A catalyst according to any one of the preceding claims, comprising boron and silicon as promoting elements.

7. A catalyst according to claim 6, further comprising phosphorous.

8. A catalyst according to any one of the preceding claims, wherein the matrix is selected from the group formed by alumina and silica-alumina, silica, aluminates.

9. A catalyst according to claim 4, wherein the halogen is fluorine.

10. A catalyst according to any one of the preceding claims, wherein the group VIIB metal is manganese.

11. A catalyst according to any one of the preceding claims, wherein the hydro-dehydrogenating elements are selected from nickel-molybdenum, nickel-tungsten, cobalt-molybdenum, cobalt-tungsten and nickel-cobalt-molybdenum combinations.

12. A process for preparing a catalyst according to any one of claims 1 to 11, wherein a mixture of at least one matrix, a beta zeolite and optionally at least one hydro-dehydrogenating metal selected from group VIII and group VIB metals is prepared, and said mixture is impregnated with at least one solution containing at least one promoter element selected from boron, silicon and phosphorous.

13. A preparation process according to claim 12, wherein the mixture is impregnated with at least one solution of at least one group VIIA element before, after or simultaneously with impregnation with the solution of the promoter element.

14. A preparation process according to claim 12 or claim 13, wherein the mixture is impregnated with at least one solution of at least one group VIIB element before, after or simultaneously with impregnation with the solution of the promoter element.

15. A preparation process according to claim 12, wherein the mixture also contains group VIIB element(s).

16. A preparation process according to any one of claims 12 to 15, wherein the mixture also contains phosphorous and is impregnated with at least one solution containing boron and by at least one solution containing silicon.

17. A process for converting hydrocarbons using a catalyst according to any one of claims 1 to 11 or using a catalyst prepared in accordance with any one of claims 12 to 16.

18. A process according to claim 17, for hydrocracking.

19. A process according to claim 18, carried out at at least 200°C, at a pressure of more than 0.1 MPa, with a hydrogen recycle ratio of at least 50 and at an hourly space velocity of 0.1 - 20 h$^{-1}$.

20. A process according to any one of claims 18 to 19, carried out at a temperature of at least 230°C, at a pressure of more than 2 MPa and less than 12 MPa, with an hourly space velocity of 0.1-10 h$^{-1}$ and with a quantity of hydrogen of at least 100 Nl/l of feed, such that the degree of conversion is less than 55%.

21. A process according to any one of claims 18 to 19 carried out at a temperature of at least 230°C, at a pressure of at least 5 MPa, with an hourly space velocity of 0.15-10 h$^{-1}$ and with a quantity of hydrogen of at least 100 l/l of feed, such that the degree of conversion is 55% or more.

22. A process according to any one of claims 18 to 21, carried out on a hydrocarbon-containing feed selected from gasolines, kerosines, gas oils, vacuum gas oils, atmospheric residues, vacuum residues, atmospheric distillates, vacuum distillates, heavy fuels, oils, waxes, paraffins, spent oil, deasphalted residues, and deasphalted crude oil.